# EUROPEAN PATENT APPLICATION

(11) **EP 3 188 331 A1**
(43) Date of publication of application: **05.07.2017**
(21) Application number: 16305328.3
(22) Date of filing: 23.03.2016
(51) Int. Cl.: H02B 13/02

(54) **RING MAIN UNIT TANK ARCHITECTURE**

(30) Priority: 30.12.2015 CN 201511021300
(71) Applicant: Schneider Electric Industries SAS, 92500 Rueil-Malmaison (FR)
(72) Inventor: LIU, Yu, 201203 Pudong (CN); FAN, Wenjie, 201203 Pudong (CN); ZHU, Yugui, 201203 Pudong (CN); LU, Dingjun, 201203 Pudong (CN); SUN, Liang, 201203 Pudong (CN); TRIOZON, André, 38760 Varces (FR); TRICHON, Francois, 38760 Varces (FR); ROSSI, Nicolas, 38760 Varces (FR)
(74) Representative: Manitz Finsterwald Patentanwälte PartmbB

(57) **Abstract**

A tank architecture for mounting several functional units, the tank architecture comprising two side panels arranged opposite to each other and upper and lower belts connected between the side panels for forming an accommodation space, the upper belt and the lower belt are connected together, and the accommodation space is use for accommodating the several functional units; wherein the tank architecture further comprises an internal stiffener assembly and an external stiffener assembly; the internal stiffener assembly is used for mounting the several functional units into the accommodation space, and the mounting positions of the several functional units can be arranged flexibly; the external stiffener assembly is used for mounting several external mechanisms, corresponding to the several functional units, outside the tank architecture. A ring main unit comprises the tank architecture mentioned above.

## Description

### BACKGROUND

The present disclosure relates to tank architecture, and particularly to tank architecture for several functional units. The present disclosure also relates to a ring main unit comprising the tank architecture.

More and more customers need ring main unit (RMU) which can be free combination. However, flexible RMU solutions, in which free combination function is possible for all of the functional units, have not been proposed yet. Presently, due to huge number of tanks for the RMU, low efficiency of technical maintenance is caused. It is required each time to design new tank architecture according to a new requirement, causing time growth and higher cost. In addition, the present tank architecture has its various components unsuitable for stacking, thus a great storage space is needed and unnecessary transportation expenses also increase.

### SUMMARY

To overcome the deficiency in prior art, the present disclosure proposes a novel tank architecture enabling the free combination for any functional units, and there are only limited quantities of parts.

According to one aspect of the present disclosure, a tank architecture for mounting several functional units is provided, which comprises two side panels arranged opposite to each other and upper and lower belts connected between the side panels for forming an accommodation space, the upper belt is connected together with the lower belt, and the accommodation space is used for accommodating several functional units; wherein the tank architecture further comprises an internal stiffener assembly and an external stiffener assembly; the internal stiffener assembly is used for mounting the several functional units into the accommodation space, and the mounting positions of the several functional units can be arranged flexibly; the external stiffener assembly is used for mounting several external mechanisms, corresponding to the several functional units, outside the tank architecture.

The internal stiffener assembly comprises several inner stiffeners mounted onto the inner side of the upper belt, the several inner stiffeners being mounted equally spaced from each other.

The internal stiffener assembly further comprises a rear beam, a cross beam and several stiffener rods for connecting the inner stiffeners with the rear beams, the cross beam and the rear beam are arranged parallel with each other and conjunctly connected between the two side panels, the cross beam being used for mounting the rear panel of the tank architecture, and the several stiffener rods being provided to be parallel with and spaced apart from each other, the stiffener rod may be made from metal materials or may be insulative.

The external stiffener assembly comprises several outer stiffeners in a shape of Ω profile in the cross section of the outer stiffener perpendicular to its longitudinal direction, the outer stiffener being provided with several mounting holes.

The inner stiffener is approximately in a shape of U profile in the cross section perpendicular to its longitudinal direction.

The inner stiffener, the rear beam and the cross beam are provided with several mounting holes respectively.

The side panels and the upper and lower belts are sheet metals.

The upper belt is provided with several sets of through holes, three of each set of through holes being arranged in a triangular arrangement, inlay screw nut of a fuse tube and the through holes are utilized for mounting the fuse tube.

The upper belt and the lower belt are welded together, and the inner stiffener connects with the upper belt through welding.

Another aspect according to the present disclosure proposes a RMU (ring main unit) comprising the tank architecture as mentioned above.

Based on above features of the present disclosure, this novel architecture employs fuses in a triangular arrangement and standardizes the functional units in their depth and width. The present architecture may also retain the "nose" for Q functional units with higher voltage etc. so as to meet partial free combination of I and Q functional units. The width of the OCO CB functional units is reduced and its height is adjusted so that it can be consistent with other functional units.

Additionally, the present disclosure proposes outer stiffeners with Ω profile and inner stiffeners with U profile for reinforcing tank architecture and fixing mechanisms, so that, during the later stage of production, it is possible to cut different holes for different functional units and thus to increase production efficiency and depress processing time.

The present disclosure also designs sheet metals (upper belt, lower belt, side panel and rear panel) which conjunctly compose the modular tank architecture. These standardized sheet metals can be stacked together, thereby reducing transportation expenses and time. The upper belt in the present disclosure has no welding stud so as to facilitate cutting holes during later stage.

This inventive modular design could reduce the number of drawings, the types of the tank and data management cost, and also could make the infrastructure design easier and improve the efficiency of technical maintenance. It is not required to design new tank architecture for a new requirement.

This inventive modular structure comprises a cross beam, standard stiffener rod and stiffener in such a way that any functional units can be arranged arbitrarily at any position in the tank, thereby achieving the free combination of 1 to 6 functional units.

So far, in order that the detailed description of the present disclosure can be better understood, and also in order that the contribution of the present disclosure to the prior art can be best recognized, the present disclosure has summarized the embodiments of present disclosure quite extensively. Of course, the embodiments of the present disclosure will be described in the following, and will establish the subject matter of the attached claims.

Before explaining the embodiment of present disclosure in detail, it should be understood that the present disclosure is not restricted to the details of structure and configuration of the components and equivalent steps set out in the following description or illustrated in the drawings. The present disclosure can comprise embodiments other than the described ones, and can be embodied and carried out in different manners. Moreover, it should be appreciated that the wording and terminology and summary used herein are merely for descriptive purpose, and should not be construed as being restrictive.

Likewise, the skilled person in this art would recognize that the technical concept on which the present disclosure is based may be readily used for the basis for designing other configuration and systems, and be used to implement several purposes of the present disclosure. Therefore, it is important that the attached claims should be construed as comprising such equivalent structures, so long as they do not go beyond the essence and scope of the present disclosure.

### BRIEF DESCRIPTION OF THE DRAWINGS

The skilled in this art would have a better understanding of the present disclosure from the following drawings, and the advantages of the present disclosure will be embodied more clearly. The drawings described herein are merely used for the purpose of describing the selected embodiments, rather than all of the possible embodiments, and do not intend to limit the scope of the present disclosure.
Fig.1 is a perspective view showing the tank architecture according to the present disclosure;
Fig.2 is a exploded side view showing the tank architecture according to the present disclosure;
Fig.3 is a top view showing the tank architecture according to the present disclosure;
Fig.4 is a rear view showing the tank architecture according to the present disclosure;
Fig.5 is a front view showing the tank architecture according to the present disclosure.

### DETAILED DESCRIPTION

In the following, a detailed description will be made to the preferable embodiments according to the present disclosure in conjunction with the attached drawings. Based on the drawings and corresponding description, the skilled person in this art would comprehend the features and advantages of the present disclosure.

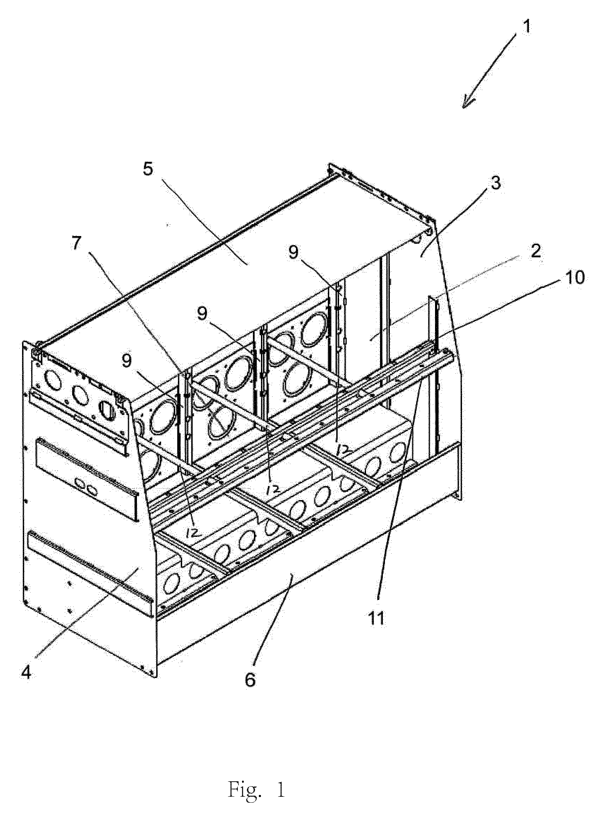

Fig.1 is perspective view showing a tank architecture 1 according to the present disclosure, wherein the tank architecture 1 comprises two side panels 3, 4 arranged opposite to each other and upper and lower belts 5, 6 connected between the side panels 3, 4, which are used to form an accommodation space 2, that is to say, the side panels 3, 4 and the upper and lower belts 5, 6 conjunctly enclose the accommodation space 2.

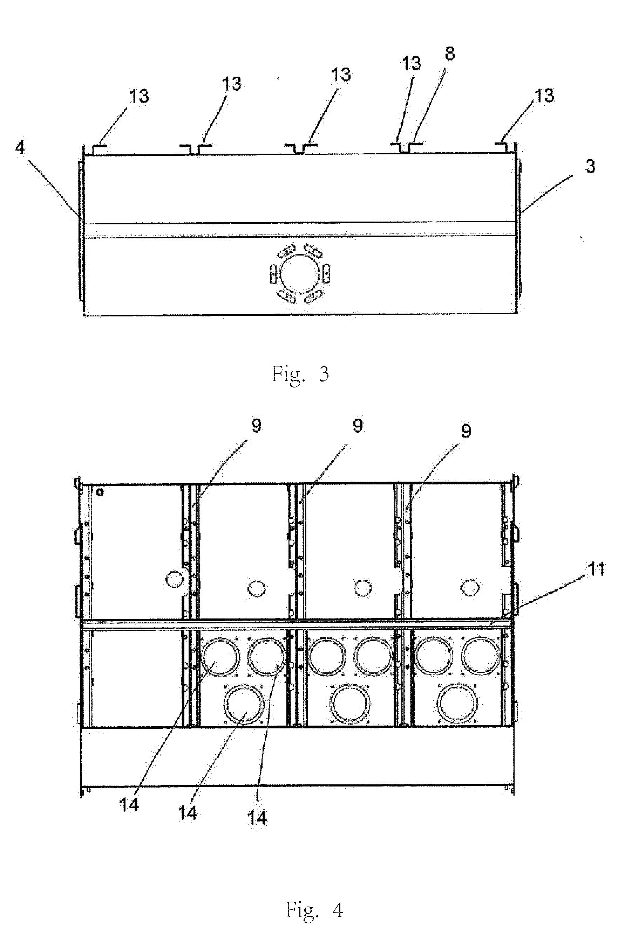

The upper belt 5 is connected together with the lower belt 6, and the accommodation space 2 is used for accommodating several functional units (not shown for the purpose of clarity); wherein the tank architecture 1 further comprises an internal stiffener assembly 7 and an external stiffener assembly 8 (see Fig.3); the internal stiffener assembly 7 is used for mounting the several functional units into the accommodation space 2, and the mounting positions of the several functional units can be arranged flexibly; the external stiffener assembly 8 is used for mounting several external mechanisms (not shown for the purpose of clarity), corresponding to the several functional units, outside the tank architecture 1. Absolutely, the skilled in this art may also arrange only one functional unit within the accommodation space.

As shown also in Fig.1, the internal stiffener assembly 7 comprises several inner stiffeners 9 mounted onto the inner side of the upper belt 5, the several inner stiffeners 9 being mounted equally spaced from each other.

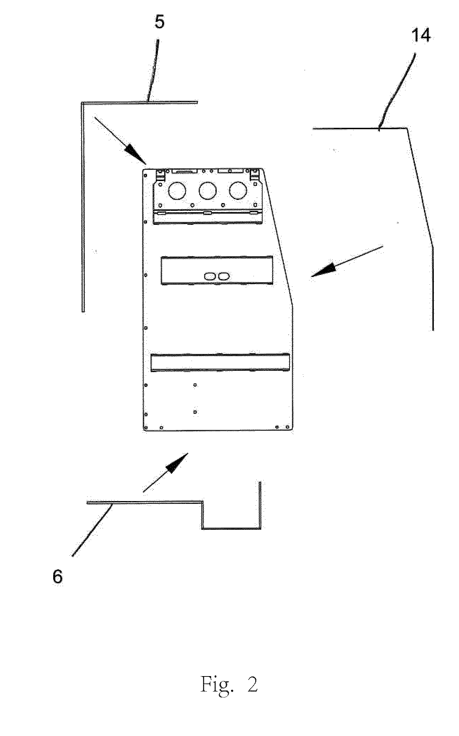

The internal stiffener assembly 7 further comprises a rear beam 10, a cross beam 11 and several stiffener rods 12 for connecting the inner stiffeners 9 with the rear beams 10, the cross beam 11 and the rear beam 10 are arranged parallel with each other and conjunctly connected between the two side panels 3, 4, the cross beam 11 being used for assembling the rear panel 14 (see Fig.2) of the tank architecture, and the several stiffener rods 12 being provided to be parallel with and spaced apart from each other.

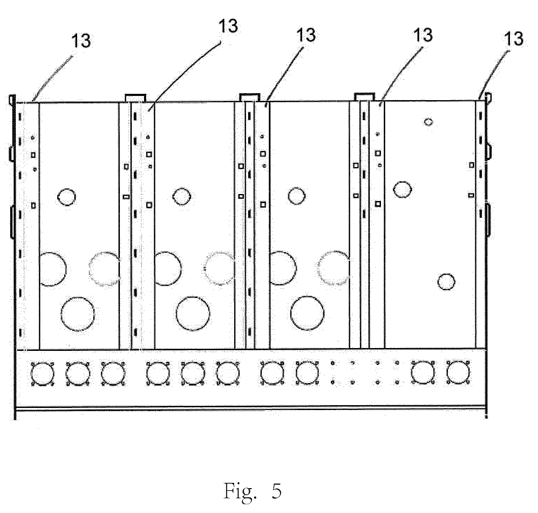

The external stiffener assembly 8 comprises several outer stiffeners 13 in a shape of Ω profile in the cross section of the outer stiffener 13 perpendicular to its longitudinal direction, the outer stiffener being provided with several mounting holes (see Fig.5).

The inner stiffener 9 and the outer stiffener 13 are used for tank reinforcement and mechanism fixation, so that, during the later stage of production, it is possible to provide different mounting holes for different functional units and thus to increase production efficiency and reduce processing time.

The inner stiffener 9 is approximately in a shape of U profile in the cross section perpendicular to its longitudinal direction.

The inner stiffener 9, the rear beam 10 and the cross beam 11 are also provided with several mounting holes respectively.

The side panels and the upper and lower belts are sheet metals. These standardized sheet metals can be stacked together, thereby reducing space occupied, cost and time during transportation.

As shown in Fig.4, the upper belt is provided with several sets of through holes, three of each set of through holes 14 being arranged in a triangular arrangement, inlay screw nut (not shown) and the through holes are utilized for the assembly of a fuse tube. Such a triangular arrangement may be used to reduce the width of a functional unit corresponding thereto so that its width is equivalent to that of other functional units. The use of inlay screw nut and through hole in a triangular arrangement may eliminate the use of welding studs, thus avoiding lower production efficiency caused by the difference among the positions of the welding studs.

As shown in Fig.2, the essentially L-shaped upper belt 5 and the lower belt 6 essentially in a scoop shape are welded together, the inner stiffener 9 is connected to the inner side of the upper belt 5 through welding.

Another embodiment according to the present disclosure provides a RMU comprising the above tank architecture.

The present architecture may also retain the "nose" for Q functional units with higher voltage etc. so as to meet partial free combination of I and Q functional units. The width of the OCO CB functional units is reduced and its height is adjusted so that it can be consistent with other functional units.

Additionally, the present disclosure proposes outer stiffeners with Ω profile and inner stiffeners with U profile for reinforcing tank architecture and fixing mechanisms, so that, during the later stage of production, it is possible to provide different holes for different functional units and thus to increase production efficiency and depress processing time.

The present disclosure also designs sheet metals (upper belt, lower belt, side panel and rear panel) which conjunctly compose the modular tank architecture. These standardized sheet metals can be stacked together, thereby reducing transportation expenses and time. The upper belt in the present disclosure has no welding stud so as to facilitate cutting holes during later stage.

This inventive modular design could reduce the number of drawings, the types of the tank and data management cost, and also make the infrastructure design easier and improve the efficiency of technical maintenance. It is not required to design new tank architecture for a new requirement.

This inventive modular structure comprises a cross beam, standard stiffener rod and stiffener in such a way that any functional units can be arranged arbitrarily at any position in the tank, thereby achieving the free combination of 1 to 6 functional units.

Referring to the specific embodiments, although the present disclosure has already been described in the Description and the drawings, it should be appreciated that the skilled person in this art could make various alteration and various equivalent matter could substitute for the method steps and detection means therein without departing from the scope of the present disclosure defined by the attached claims. Furthermore, the combination and mating among the technical features, elements and/or functions of the specific embodiments herein is clear, thus according to the present disclosure, the skilled person in this art could appreciate that the technical features, elements and/or functions in these embodiments may be combined into another specific embodiment as required, unless the aforesaid contents being otherwise described. Moreover, according to the teaching of the present disclosure, many modifications may be done so as to adapt to special situation without departing from the essential scope of the present disclosure. Therefore, the present disclosure is not limited to individual specific embodiments illustrated in the drawings, and specific embodiments described as the optimal embodiments proposed for conducting the present disclosure in the Description, but the present disclosure intends to encompass all the embodiments fell into the scope of the Description and the attached claims.

## Claims

1. A tank architecture for mounting several functional units, the tank architecture comprising two side panels arranged opposite to each other and upper and lower belts connected between the side panels for forming an accommodation space, the upper belt and the lower belt are connected together, and the accommodation space is use for accommodating the several functional units;
wherein the tank architecture further comprises an internal stiffener assembly and an external stiffener assembly;
the internal stiffener assembly is used for mounting the several functional units into the accommodation space, and the mounting positions of the several functional units can be arranged flexibly; the external stiffener assembly is used for mounting several external mechanisms, corresponding to the several functional units, outside the tank architecture.

2. The tank architecture according to claim 1, wherein the internal stiffener assembly comprises several inner stiffeners mounted onto the inner side of the upper belt, the several inner stiffeners being mounted equally spaced from each other.

3. The tank architecture according to claim 2, wherein the internal stiffener assembly further comprises a rear beam, a cross beam and several stiffener rods for connecting the inner stiffeners with the rear beams, the cross beam and the rear beam are arranged parallel with each other and conjunctly connected between the two side panels, the cross beam being used for mounting the rear panel of the tank architecture, and the several stiffener rods being provided to be parallel with and spaced apart from each other.

4. The tank architecture according to claim 1, wherein the external stiffener assembly comprises several outer stiffeners in a shape of Ω profile in the cross section of the outer stiffener perpendicular to its longitudinal direction, the outer stiffener being provided with several mounting holes.

5. The tank architecture according to claim 3, wherein the inner stiffener is approximately in a shape of U profile in the cross section perpendicular to its longitudinal direction.

6. The tank architecture according to claim 3, wherein the inner stiffener, the rear beam and the cross beam are provided with several mounting holes respectively.

7. The tank architecture according to claim 1, wherein the side panels and the upper and lower belts are sheet metals.

8. The tank architecture according to claim 7, wherein the upper belt is provided with several sets of through holes, three of each set of through holes being arranged in a triangular arrangement, inlay screw nut of a fuse tube and the through holes are utilized for mounting the fuse tube.

9. The tank architecture according to claim 2, wherein the upper belt and the lower belt are welded together, and the inner stiffener connects with the upper belt through welding.

10. A ring main unit comprising a tank architecture according to any one of claims 1 to 9.
